# EUROPEAN PATENT SPECIFICATION

(11) **EP 0 729 266 B1**
(45) Date of publication and mention of the grant of the patent: **22.10.2003**
(21) Application number: 96102577.2
(22) Date of filing: 21.02.1996
(51) Int. Cl.: H04N 1/21

(54) **Digital electronic still camera**
Digitale elektronische Standbildkamera
Caméra numérique électronique pour images fixes

(30) Priority: 21.02.1995 JP 3259595; 28.02.1995 JP 4013695; 17.08.1995 JP 20972495
(43) Date of publication of application: 28.08.1996
(73) Proprietor: Ricoh Company, Ltd, Ohta-ku Tokyo 143 (JP)
(72) Inventor: Hashimoto, Tetsuya, Chiba-ken, (JP); Fukuoka, Hiroki, Sun-Greis Tsunashima Ichibankan,, Yokohama-shi, Kanagawa-ken, (JP)
(74) Representative: Schwabe - Sandmair - Marx

(56) References cited:
- EP-A- 0 585 853
- EP-A- 0 594 992
- US-A- 4 901 160

## Description

This invention relates to a digital electronic still camera according to one of the independent claims or a combination of features of the independent claims, which is in particular capable of recording image data and voice data to a storage medium, more particularly a digital electronic still camera capable of communicating with external communication devices, such as a personal computer, a facsimile, and a portable telephone set.

At present, an apparatus that can directly input image and voice to an information device is desired. For example, devices to input image data and voice data via storage media (a memory card, a hard disk, MO, etc.) are commercialized. However, further an apparatus that can continuously take image data and so on into information devices in real time is desired. On the information device side, conditions to input image data and so on are diverse, including, for example, input by cable and at high speed, or data transaction by radio with portable external devices. As an apparatus to output these image data and so on, there is a digital electronic still camera.

EP 0 594 995 A1 discloses an information signal processing apparatus for recording information signal in a recording medium. The information signal processing apparatus is arranged to record still image data and sound data in a recording medium and comprises decision means for determining whether a combination of the still image data and the sound data recorded in the recording medium is appropriate, on the basis of a recording time of each of the still image data and the sound data, and processing means for combining, if the decision means determines that the combination of the still image data and the sound data is appropriate, the still image data with the sound data and executing predetermined processing.

In EP 0 585 853 A2 is disclosed, an image pickup apparatus, which uses a FIFO memory as an intermediate memory, which is arranged before the recording medium, to enhance the speed of data transmission.

As a prior art related to data processing and communication in a digital electronic still camera, the Japanese Patent Laid Open No. 4-980 shows that a digital electronic still camera is mounted with a connector to which image data is given and an interface card which provides image data output means for outputting the image data given to the connector to an external image data processing means. Also, the Japanese Patent Laid Open No. 5-167979 shows that in a digital electronic still camera, compressed image data is received, and it is expanded by compression/expansion means by a built-in transmission/receiving circuit and made available for transmission. Further, the Japanese Patent Laid Open No. 3-268583 shows that, by making a recording medium detachable with regard to an interface part, program data to control functions of a digital electronic still camera which comprises a storage part can be externally rewritten, and thereby various functional operations can be executed.

According to the above-mentioned prior art, however, there is a problem that, since data is handled in file units in data communication, and, when transacting voice data together with image data, the image data and the voice data are handled separately, which image file corresponds or relates to which voice file cannot be identified.

Further, even using a memory card providing a flash memory of either a data transfer or a burst transfer type, high-speed transmission is not possible when transmitting data, since there is no buffer to store a certain quantity of data corresponding to the read burst data. Likewise, there is a problem in receiving data in that high-speed receiving is not possible since there is no buffer to store a certain quantity of data corresponding to the received burst data.

It is an object of this invention to provide a digital electronic still camera that can exactly and surely transact data in data communication to enable highly reliable data communication, more particularly a digital electronic still camera that can identify the correspondence or relationship between image data and voice data, enabling high-speed transaction in data communication.

The problems of the prior art are dealt with by means of the subject matters of the independent claim 1.

It is clear that particularly advantageous camera devices are provided if the features of the independent claims be combined.

In order to solve in particular the above-described object, a digital electronic still camera which features of the present invention comprises
photographing means for photographing an object and outputting image data; image data encoding means for encoding image data; means for recording the encoded image data to a recording medium as a prescribed image file; means for converting voice to an electric signal; voice data encoding means for encoding the voice data converted into an electric signal; means for recording the encoded voice data to a recording medium as a prescribed voice file; means for reading the encoded image data from the recording medium; means for decoding the read image data; means for reading the encoded voice data from the recording medium; means for decoding the read voice data; and communication means for enabling communication with communicable external devices, characterized in that:
the recording medium being provided with a plurality of flash memories and transfer memories of either a data transfer or a burst transfer type for transferring data to each flash memory; a FIFO memory capable of storing a certain quantity of data; means for storing at least image data or voice data read from said flash memory into said FIFO memory and transferring the data stored at this FIFO memory to said communication means when transmitting, wherein related image and voice files are composed in one file by the CPU when transmitting; and means for storing received data into said FIFO memory and making said flash memory record the data of this FIFO memory when receiving, wherein the received composite file of image and voice is separable into an image file and a voice file by the CPU;
and in that the number of transfers of said FIFO memory is set to an integral multiple of a transfer size of said flash memory.

This embodiment provides the advantage that it is capable of transmitting an image file and a voice file which are related to each other as one file using the FIFO memory, the association of the image file and the voice file can be easily identified, and yet the received composite file can be separated into image and voice files and recorded as in the ordinary processing.

Also advantageously, a digital electronic still camera comprises photographing means for photographing an object and outputting image data; image data encoding means for encoding image data; means for recording the encoded image data to a storage medium; means for reading the encoded image data from the storage medium, means for decoding the read image data; communication means for enabling communication with communicable external devices; said recording medium being provided with a flash memory of either a data transfer or a burst transfer type; a FIFO memory capable of storing a certain quantity of data; means for storing image data read from said flash memory into said FIFO memory and transferring the data stored at this FIFO memory to said communication means when transmitting; and means for storing received data into said FIFO memory and making said flash memory record the data of this FIFO memory when receiving. This embodiment provides the advantage that when transacting image data as the FIFO memory is available as buffer that can store a certain amount of data; high-speed transaction is enabled by using a memory of a burst transfer type as the flash memory for recording the image data.

Furthermore, a digital electronic still camera of the present invention is characterized in that the number of transfers in said FIFO memory is set to an intergral multiple of the transfer size of said flash memory. This embodiment can provide the advantage that a good transaction is performed by matching the number of transfers to the FIFO memory with the transfer size of the flash memory in said composition.

Embodiments according to this invention are described below with reference to the accompanying drawings. In connection with the following detailed description further features, advantages and objects corresponding to the present invention are disclosed. In the drawings:
- Fig. 1: is a block diagram showing a composition of a digital electronic still camera according to the first embodiment of the present invention;
- Fig. 2: is a block diagram showing an arrangement of internal files of a PC card according to the first embodiment of the present invention;
- Fig. 3: is a flow chart relating to data communication according to the first embodiment of the present invention;
- Fig. 4: is a block diagram showing a composition of the second embodiment of the present invention;
- Fig. 5: is a block diagram showing an arrangement of internal files of a memory card according to the second embodiment of the present invention; and

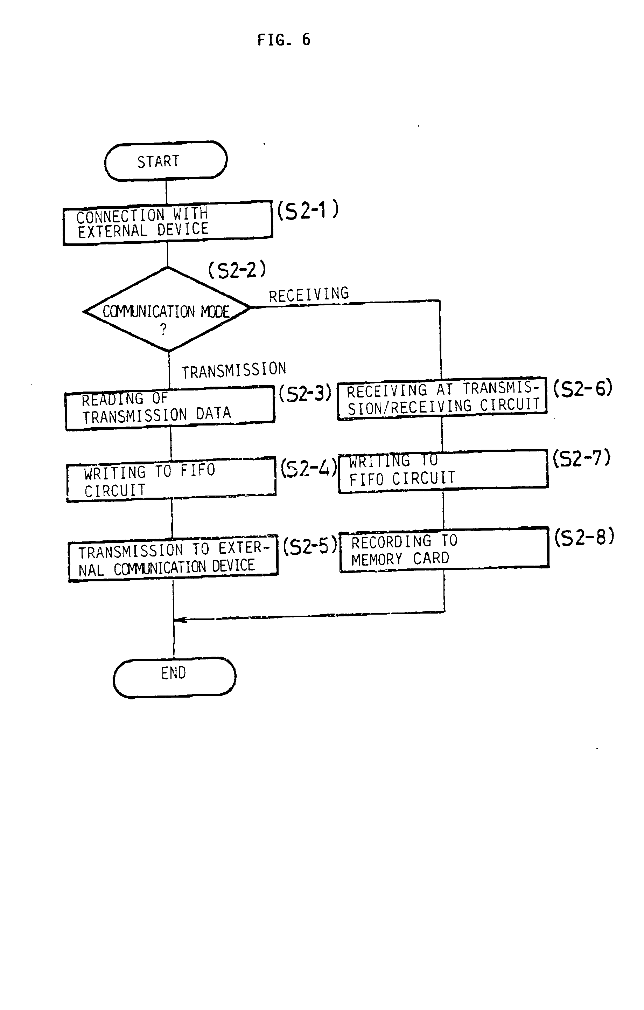

- Fig. 6: is a flow chart relating to data communication according to the second embodiment of the present invention.

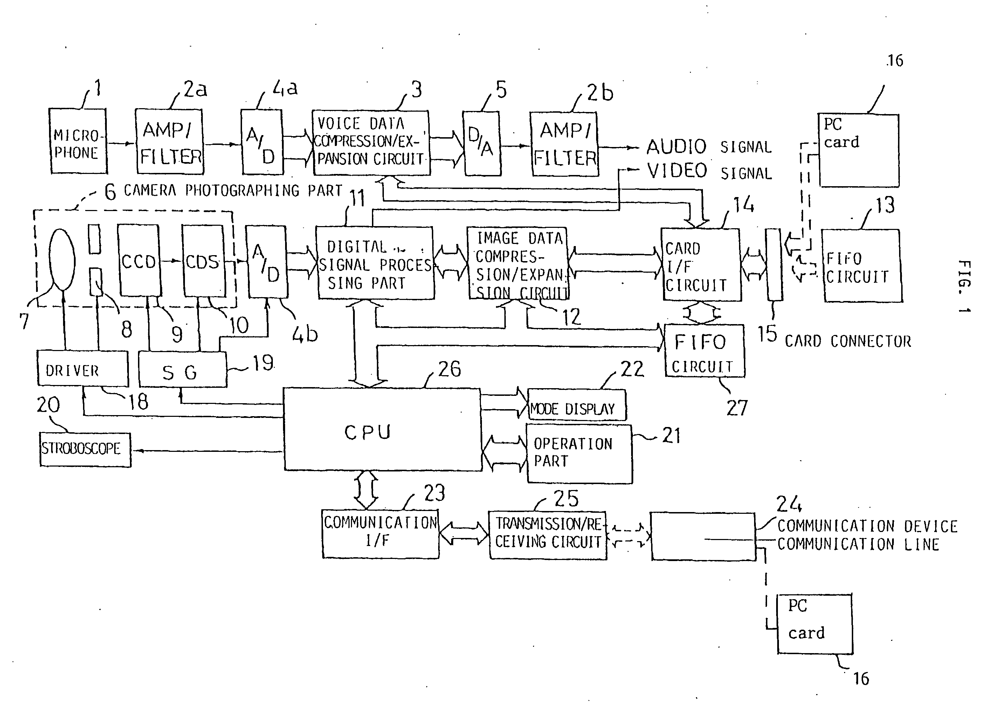

Fig. 1 is a block diagram showing a composition of a first embodiment of the present invention, wherein a reference numeral 1 is a microphone, 2a and 2b are each an amplifier/filter, 3 is a voice data compression/expansion circuit which is a voice data encoding means and a voice data decoding means for encoding/decoding voice data, 4a and 4b are each a A/D (analog/digital) conversion circuit, and 5 is a D/A (digital/analog) conversion cirucit.

A reference numeral 6 is a camera photographing part comprising a taking lens 7, an iris 8, CCD (or MOS) 9 which is a photographing element, and a CDS (correlative double sampling) circuit 10, 11 is a digital signal processing circuit to perform various types of image processing, 12 is an image data compression/expansion circuit to be an image data encoding means and an image data decoding means for coding/decoding image data, 27 is a FIFO circuit, 14 is a card I/F circuit for taking an interface (I/F) between an ordinary memory card function and a PC card 16 which is a kind of a storage medium having reading and writing functions in a personal computer (PC), and 15 is a card connector to which said PC card 16 and so on are connected.

A reference numeral 18 is a driver of a mechanical system of said camera photographing part 6, 19 is a timing signal generation part (SG) of an electric system of the camera photographing part 6, 20 is a stroboscope to be a lighting means, 21 is an operation part for setting various modes, and 22 is a mode display part for displaying the set mode.

A reference numeral 23 is a communication I/F (for example, a serial-interface RS-232C) for taking I/F with externally communicable devices such as a communication device 24, 25 is a transmission/receiving circuit for transmitting data to or receiving data from a communication line, and 26 is a CPU for controlling said each part.

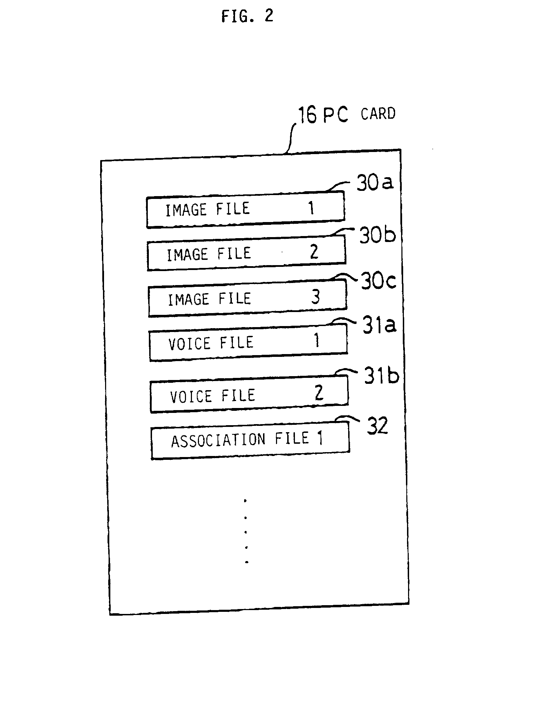

Fig. 2 is a block diagram showing an arrangement of internal files of said PC card, wherein the PC card 16 is recorded with a format that can be easily read by an operation system on the PC side to facilitate reading on the PC side. Normally, a DOS format is used. In the PC card 16, a plurality of image files 30a through 30c; voice files 31a and 31b, an association file 32 and so on are stored; and photographed image data files and voice data files are stored. In this DOS file style, reading and writing with regard to a rewriting data area is performed in said CPU 26.

In Fig. 1, an objective image is input from the taking lens 7 to CCD 9 which is a photographing element and converted into an electric signal. A signal outputted from the photographing element passes the CDS circuit 10, and is converted to a digital signal with an optimal frequency (for example, an integral multiple of a sub-carrier frequency of a NTSC signal) at the A/D conversion circuit 4b. The CDS output signal converted to a digital signal is subjected to normal camera processing such as gamma correction, color separation and so on at the digital signal processing circuit 11, and thereby Y (brightness) Cb and Cr (color difference) are produced. These signals are encoded by an image compression part of the image data compression/expansion circuit 12, and recorded to the FIFO (or DRAM) circuit 27 which is a storage element. The compressed image data recorded in the FIFO circuit is read out via the card I/F circuit 14, outputted to the PC card 16 which is formed in said recording format, and recorded as a prescribed image file.

On the other hand, voice is converted into an electric signal by the microphone 1 which is a voice-electric signal conversion element, and further, amplified by the amplifier/filter 2a, and through a filter to cut off to a required band, converted to a digital signal with a sampling frequency which is more than double the required band at the A/D conversion circuit 4a. This signal is encoded at a voice compression part of the voice data compression/expansion circuit 3, and recorded to said FIFO circuit 27. The compressed voice data recorded to the FIFO circuit 27 is read out through the card I/F circuit 14, outputted to the PC card 16, and recorded as a prescribed voice file.

Next, the operation of image/voice data decoding is described.

The compressed image data read out from the PC card 16 passes through the card I/F circuit 14, and written to an image FIFO of the FIFO circuit 27. The image data written here is expanded in real time at an image expansion part of the image data compression/expansion circuit 12, and inputted to the digital signal processing circuit 11. The Y, Cb and Cr signals inputted to the digital signal processing circuit 11 are digitally encoded to NTSC signals, D/A converted, and outputted as video signals.

On the other hand, the compressed voice data read out from the PC card 16 is written to a voice FIFO of the FIFO circuit 27 through the card I/F circuit 14. The voice data written here is expanded in real time at a voice expansion part of the voice data compression/expansion circuit 3, converted to an analog signal at the D/A conversion circuit 5, and outputted as an audio signal.

The CPU 26 controls all operations in the digital electronic still camera following instructions from the operation part 21 and external operation instructions such as a remote control, which is not shown in the drawing. Also, display, such as internal conditions of the digital electronic still camera, is displayed at the mode display part 22 (for example, LCD, LED, EL, etc.).

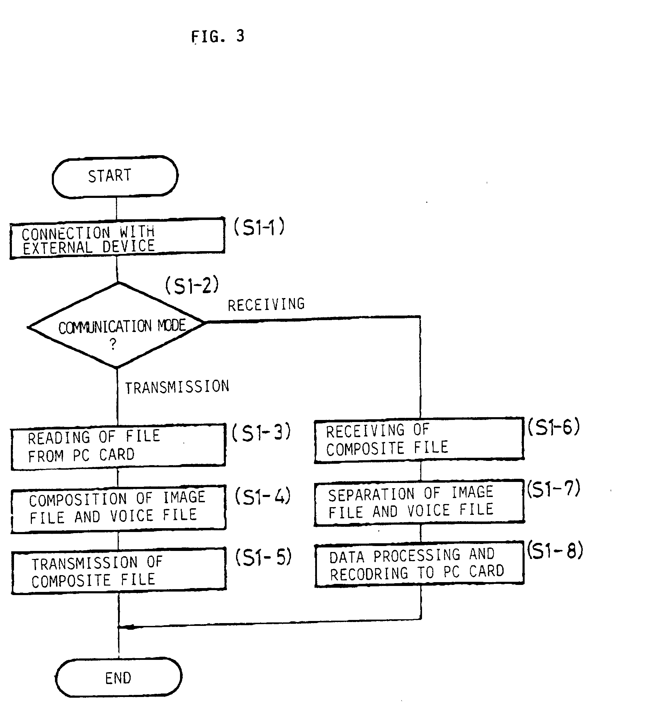

Next, operation in data communication according to the first embodiment is described with reference to a flow chard of Fig. 3 in the following.

According to the first embodiment, communication with an external PC and the like can be made using the PC card 16, and further communication with an external device can be also made by connecting a communication line to a terminal connection part of the camera body. For example, when the communication device 24 is connected via the communication line (S1-1), under a transmission mode (S1-2) the CPU 26 reads out an image file and a voice file recorded in the PC card 16 to be a subject of transmission (S1-3), and write them via the card I/F circuit 14 to the FIFO circuit 27. The image file and voice file written to the FIFO circuit 27 are composed in one file (S1-4), and this composite file is sent to the communication device 24 through the communication I/F 23 and the transmission/receiving circuit 25 (S1-5).

Since associated image and voice files are composed and transmitted together, they are transmitted maintaining the association of both files. Also, with regard to the FIFO circuit 27, a composite file can be easily produced by first transferring an image file and then transferring a voice file.

Under a receiving mode, the sent composite file of image and voice is transferred and written to the FIFO circuit 27 via the transmission/receiving circuit 25 and the communication I/F 23 (S1-6). In the FIFO circuit 27, the composite file is separated into an image file and a voice file (S1-7), and both files, as described above, are each subjected to digital signal processing and recorded to the PC card 16 (S1-8). An association file of the received image file and the voice file is recorded to said association file 32.

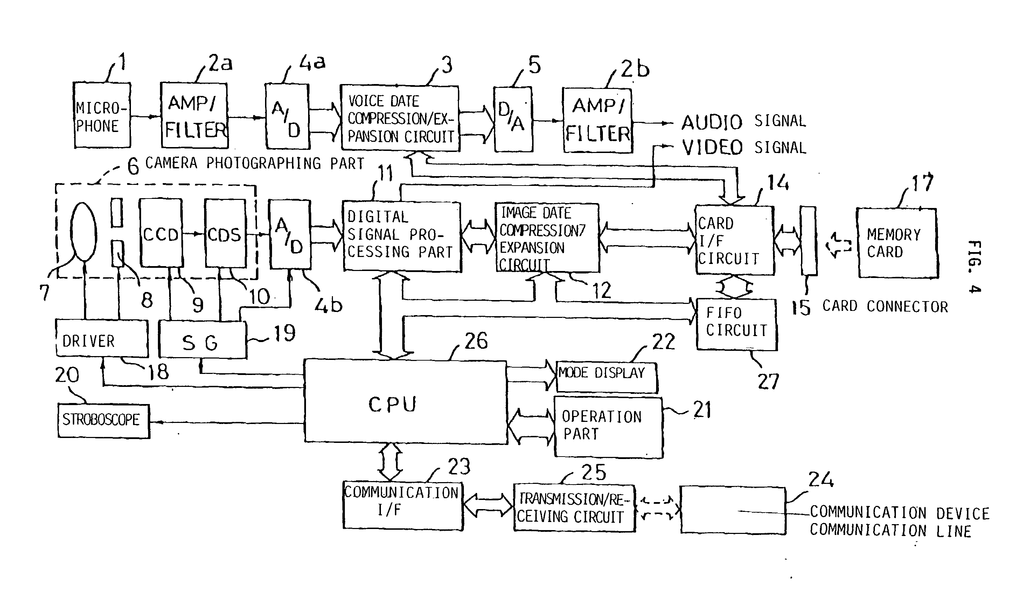

Fig. 4 is a block diagram showing a composition of a second embodiment of the present invention. It can be understood, however, that also the technical teaching and particular features of the first embodiment can be used in the second embodiment to provide the advantages described here, also in an increased manner. The composition according to this second embodiment is basically the same as the composition of Fig. 1 of the first embodiment. That is, when only different parts are described by denoting like parts with like reference characters and omitting detailed descriptions about them, a reference numeral 17 is a memory card as a recording medium comprising a plurality of flash memories of either a data transfer or a burst transfer type, a reference numeral 14 is a card I/F circuit for taking interface (I/F) with the memory card 17, and a reference numeral 15 is a card connector to which the memory card 17 is connected. Further, a reference numeral 27 is a FIFO circuit for temporarily storing a certain amount of data which is located between said card I/F circuit 14 and CPU 26.

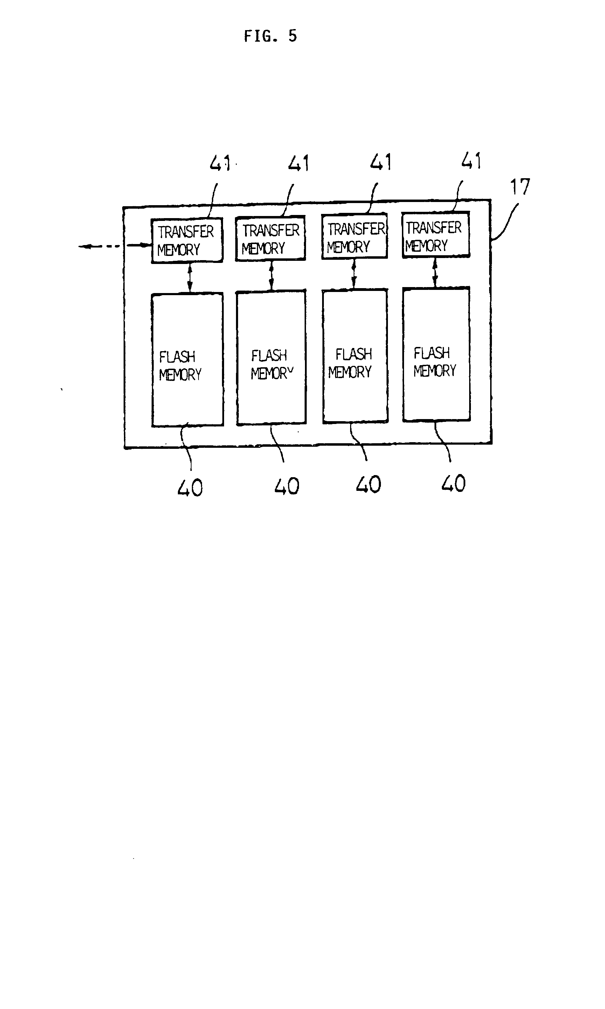

Fig. 5 is a block diagram showing an internal arrangement of said memory card. The memory card 17 provides a plurality of flash memories 40 (an EEPROM, for example, and four memories are used in this embodiment), and transfer memories 41 for transferring data to each flash memory 40. In this embodiment, 24MB memories are used for said flash memories, and memories with 256B in burst transfer size are used for said transfer memories.

Also, as described later, data transaction is performed with said memory card 17, and the number of transfers to the FIFO circuit 27 to be a memory means is set to be an integral multiple of a burst transfer size of said flash memories 40.

In Fig. 4, like the case of the first embodiment, an objective image is input from the taking lens 7 to CCD 9 which is a photographing element and converted into an electric signal. A signal outputted from the photographing element passes the CDS circuit 10, and is converted to a digital signal with an optimal frequency (for example, an integral multiple of a sub-carrier frequency of a NTSC signal) at the A/D conversion circuit 4b. The CDS output signal converted to a digital signal is subjected to normal camera processing such as gamma correction, color separation and so on at the digital signal processing circuit 11, and thereby Y (brightness), Cb and Cr (color difference) are procuded. And, according to the second embodiment, these signals are encoded by an image compression part of the image data compression/expansion circuit 12, and being controlled by the CPU 26, input to said memory card 17 via the card I/F circuit 14, and recorded to a flash memory 40 as a prescribed image file.

On the other hand, voice, like the case of the first embodiment, is converted into an electric signal by the microphone 1 which is a voice-electric signal conversion element, and further, amplified by the amplifier/filter 2a, and through a filter to cut off to a required band, converted to a digital signal with a sampling frequency which is more than double the required band at the A/D conversation circuit 4a. And, according to the second embodiment, this signal is encoded at a voice compression part of the voice data compression/expansion circuit 3, and being controlled by the CPU 26, input to said memory card 17 via the card I/F circuit 14, and recorded to a flash memory 40 as a prescribed voice file.

Next, the operation of image/voice data decoding is described.

The compressed image data read out from the memory card 17, being controlled by the CPU 26, passes through the card I/F circuit 14, input to the image data compression/expansion circuit 12 and expanded at an image expansion part thereof, and inputted to the digital signal processing circuit 11. The Y, Cb and Cr signals inputted to the digital signal processing circuit 11 are digitally encoded to NTSC signals, D/A converted, and outputted as video signals.

On the other hand, the compressed voice data read out from the memory card 17, being controlled by the CPU 26, passes through the card I/F circuit 14, input to the voice data compression/expansion circuit 3 and expanded at a voice expansion part thereof, converted to an analog signal at the D/A conversion circuit 5, and outputted as an audio signal.

The CPU 26 controls all operations in the camera following instructions from the operation part 21 and an external operation device such as a remote control, which is not shown in the drawing. Also, displays such as internal conditions of the digital electronic still camera, are displayed at the mode display part 22 (for example, LCD, LED, EL, etc.).

Next, operation in data communication according to the second embodiment as described in the following.

That is, when the communication device 24 is connected via a communication line (S2-1), under a transmission mode (S2-2) the CPU 26 reads out the image data or voice data, to be a subject of transmission, recorded in the flash memory 40 of the memory card 17 (S2-3), burst-transfers the data by the transfer memory 41 to the FIFO circuit 27 via the card I/F circuit 14, and write the data to the FIFO circuit 27 (S2-4). The image data or voice data written to the FIFO circuit 27, being controlled by the CPU 26, is sent to the communication device 24 through the communication I/F 23 and the transmission/receiving circuit 25 (S2-5).

Under a receiving mode (S2-2), image data or voice data sent from the communication device 24 is received by the transmission/receiving circuit 25 (S2-6), transferred and written to the FIFO circuit 27 via the communication I/F 23 (S2-7). The image data or voice data written to the FIFO circuit 27, being controlled by the CPU 26, is burst-transferred by the transfer memory 41 to the flash memory 40 of the memory card 17, and recorded as a previously set image file or voice file (S2-8).

Additionally, data processing by the memory card 17 and the FIFO circuit 27 of the second embodiment is also applicable even when an objective data is image data only.

As described in detail above, it is aim of the essential advantages of the invention that, since the digital electronic still camera according to the present invention is capable of transmitting an image file and a voice file which are related to each other as one file using the CPU, the association of the image file and the voice file can be easily identified, and yet the received composite file can be separated into image and voice files and recorded as in the ordinary processing.

It is a further advantage of the invention that, when transacting image data as the FIFO memory is available as buffer that can store a certain amount of data, high-speed transaction is enabled by using a memory of a burst transfer type as the flash memory for recording the image data.

It is another advantage of the invention that it is also possible to make said effect work when transacting voice data.

According to several embodiments of the invention a good transaction is performed by matching the number of transfers to the FIFO memory with the transfer size of the flash memory in said composition.

A digital electronic still camera is proposed, in which a CPU 26 composes, when transmitting an image file and a voice file which are related to each other, said files into one file of a FIFO memory circuit 13 and said one file is transferred to a communication circuit 24. When the files have been received, the received composite file of image and voice is separated into an image file and a voice file, subjected to data processing, and recoded to the PC card 16. Therefore, when performing data communication the correspondence and association of image data and voice data are made identifiable.

### List of Reference Numbers

- 1: Microphons
- 3: Voice data compression/expansion circuit
- 6: Camera photographing part
- 11: Digital signal processing part
- 12: Image data compression/expansion circuit
- 13: FIFO circuit
- 14: Card I/F circuit
- 15: Card connector
- 16: PC card
- 17: Memory card
- 21: Operation part
- 23: Communication I/F
- 24: Communication device
- 25: Transmission/receiving circuit
- 26: CPU
- 27: FIFO circuit
- 30a-30c: Image files
- 31a, 31b: Voice files
- 32: Association file
- 40: Flash memory
- 41: Transfer memory

### [Fig. 1]

- 1: Microphone
- 3: Voice data compression/expansion circuit
Audio signal
Video signal
- 6: Camera photographing part
- 11: Digital signal processing part
- 12: Image data compression/expansion circuit
- 13: FIFO circuit
- 14: Card I/F circuit
- 15: Card connector
- 16: PC card
- 18: Driver
- 20: Stroboscope
- 21: Operation part
- 22: Mode display
- 23: Communication I/F
- 24: Communication device
Communication line
- 25: Transmission/receiving circuit

### [Fig. 2]

- 16: PC card
- 30a: Image file 1
- 30b: Image file 2
- 30c: Image file 3
- 31a: Voice file 1
- 31b: Voice file 2
- 32: Association file 1

### [Fig. 3]

### Start

- (S1-1): Connection with external device
- (S1-2): Communication mode?
Receiving
Transmission
- (S1-3): Reading of file from PC card
- (S1-4): Composition of image file and voice file
- (S1-5): Transmission of composite file
- (S1-6): Receiving of composite file
- (S1-7): Separation of image file and voice file
- (S1-8): Data processing and recording to PC card End

### [Fig. 4]

- 1: Microphons
- 3: Voice data compression/expansion circuit
Audio signal
Video signal
- 6: Camera photographing part
- 11: Digital signal processing part
- 12: Image data compression/expansion circuit
- 14: Card I/F circuit
- 15: Card connector
- 17: Memory card
- 18: Driver
- 20: Stroboscope
- 21: Operation part
- 22: Mode display
- 23: Communication I/F
- 24: Communication device
Communication line
- 25: Transmission/receiving circuit
- 27: FIFO circuit

### [Fig. 5]

### To card I/F circuit

- 40: Flash memory
- 41: Transfer memory

### [Fig. 6]

### Start

- (S2-1): Connection with external device
- (S2-2): Communication mode?
Receiving
Transmission
- (S2-3): Reading of transmission data
- (S2-4): Writing to FIFO circuit
- (S2-5): Transmission to external communication device
- (S2-6): Receiving at transmission/receiving circuit
- (S2-7): Writing to FIFO circuit
- (S2-8): Recording to memory card
End

## Claims

1. A digital electronic still camera comprising:
photographing means (6-10) for photographing an object and outputting image data; image data encoding means (12) for encoding image data; means (14) for recording the encoded image data to a recording medium (17) as a prescribed image file; means (1) for converting voice to an electric signal; voice data encoding means (3) for encoding the voice data converted into an electric signal; means (14) for recording the encoded voice data to said recording medium (17) as a prescribed voice file; means (14) for reading the encoded image data from the recording medium (17); means (12) for decoding the read image data; means (14) for reading the encoded voice data from the recording medium (17); means (3) for decoding the read voice data; and communication means (24) for enabling communication with communicable external devices, **characterized in that**:
the recording medium (17) being provided with a plurality of flash memories (40) and transfer memories (41) of either a data transfer or a burst transfer type for transferring data to each flash memory; a FIFO memory (27) capable of storing a certain quantity of data; processing means (26) for storing at least image data or voice data read from said flash memories (40) into said FIFO memory (27) and transferring the data stored at said FIFO memory (27) to said communication means (24) when transmitting, wherein related image and voice files are composed in one file by processing means (26) when transmitting; and processing means (26) for storing received data into said FIFO memory (27) and making said flash memory (40) record the data of this FIFO memory (27) when receiving, wherein the received composite file of image and voice is separable into an image file and a voice file by processing means (26);
and **in that** the number of transfers of said FIFO memory (27) is set to an integral multiple of a burst transfer size of said flash memories (40).

## Patentansprüche

1. Eine digital elektronische Fotokamera umfassend:
fotografische Mittel (6-10) zum Fotografieren eines Objektes und Ausgabe von Bilddaten; Bilddatencodiermittel (12) zur Codierung der Bilddaten; Mittel (14) um die codierten Bilddaten auf ein Aufzeichnungsmedium (17) als eine vorgeschriebene Bilddatei aufzuzeichnen; Mittel (1) um Sprache bzw. Ton in ein elektrisches Signal zu konvertieren; Sprachdatencodiermittel bzw. Tondatencodiermittel (3) um die Sprachdaten bzw. Tondaten in ein elektrisches Signal zu konvertieren; Mittel (14), um die kodierten Sprachdaten bzw. Tondaten auf das Aufzeichnungsmedium (17) als eine vorgeschriebene Sprachdatei bzw. Tondatei aufzuzeichnen; Mittel (14) um die kodierten Bilddaten von dem Aufzeichnungsmedium (17) zu lesen; Mittel (12) um die gelesenen Bilddaten zu decodieren; Mittel (14) um die codierten Sprachdaten bzw. Tondaten von dem Aufzeichnungsmedium (17) zu lesen; Mittel (3) um die gelesenen Sprachdaten bzw. Tondaten zu decodieren; und Kommunikationsmittel (24) um die Kommunikation mit kommunikationsfähigen externen Geräten zu ermöglichen, **gekennzeichnet durch**:
das Aufzeichnungsmedium (17), das mit einer Vielzahl von Flash-Memories bzw. Flash-Speicher (40) und Übertragungsspeichern (41) von entweder einem Datentransfertyp oder einem Bursttransfertyp bzw. Typ mit stoßweiser Übertragung bereitgestellt, ist, um Daten zu jedem Flash-Memory bzw. Flash-Speicher zu übertragen; einen FIFO-Speicher (27), der fähig ist eine gewisse Menge an Daten zu speichern; Verarbeitungsmittel (26), um zumindest Bilddaten oder Sprachdaten bzw. Tondaten, die von den Flash-Memories bzw. Flash-Speichern (40) gelesen wurden, in den FIFO-Speicher (27) zu speichern und die Daten, die in dem FIFO-Speicher (27) gespeichert sind, zu den Kommunikatonsmitteln (24) zu transferieren, wenn übertragen wird, wobei verwandte Bild- und Sprach- bzw. Tondateien in einer Datei **durch** Verarbeitungsmittel (26) zusammengesetzt bzw. zusammengefaßt sind, wenn Übertragen wird; und Verarbeitungsmittel (26), um empfangene Daten in den FIFO-Speicher (27) zu speichern und um zu veranlassen, dass das Flash-Memory bzw. der Flash-Speicher (40) die Daten dieses FIFO-Speichers (27) aufzeichnet, wenn empfangen wird, wobei die empfangene zusammengesetzte bzw. zusammengefaßte Bild- und Sprach- bzw. Tondatei **durch** Verarbeitungsmittel (26) in eine Bilddatei und eine Sprach- bzw. Tondatei trennbar ist;
und **dadurch**, dass die Anzahl der Übertragungen des FIFO-Speichers (27) auf ein ganzzahliges Vielfaches einer Burstübertragungsgröße bzw. Größe einer stoßweisen Übertragung der Flash-Memories bzw. Flash-Speicher (40) gesetzt wird.

## Revendications

1. Caméra fixe électronique numérique comprenant:
un moyen de photographie (6-10) pour photographier un objet et émettre en sortie des données d'image ; un moyen de codage de données d'image (12) pour coder des données d'image ; un moyen (14) pour enregistrer les données d'image codées sur un support d'enregistrement (17) en tant que fichier d'image prescrit ; un moyen (1) pour convertir une voix selon un signal électrique ; un moyen de codage de données de voix (3) pour coder les données de voix qui sont converties selon un signal électrique ; un moyen (14) pour enregistrer les données de voix codées sur ledit support d'enregistrement (17) en tant que fichier de voix prescrit ; un moyen (14) pour lire les données d'image codées à partir du support d'enregistrement (17) ; un moyen (12) pour décoder les données d'image lues ; un moyen (14) pour lire les données de voix codées à partir du support d'enregistrement (17) ; un moyen (3) pour décoder les données de voix lues ; et un moyen de communication (24) pour permettre une communication avec des dispositifs externes pouvant communiquer, **caractérisée en ce que** :
le support d'enregistrement (17) est muni d'une pluralité de mémoires flash (40) et de mémoires de transfert (41) de soit un type transfert de données, soit un type transfert par salve pour transférer des données sur chaque mémoire flash ; dune mémoire FIFO (27) pouvant stocker une certaine quantité de données ; d'un moyen de traitement (26) pour stocker au moins des données d'image ou des données de voix qui sont lues à partir desdites mémoires flash (40) dans ladite mémoire FIFO (27) et pour transférer les données stockées au niveau de ladite mémoire FIFO (27) sur ledit moyen de communication (24) lors d'une émission, où des fichiers d'image et de voix concernés sont constitués selon un seul fichier par ledit moyen de traitement (26) lors dune émission ; et ledit moyen de traitement (26) permet de stocker des données reçues dans ladite mémoire FIFO (27) et de faire en sorte que ladite mémoire flash (40) enregistre les données dans cette mémoire FIFO (27) lors dune réception, où le fichier composite reçu constitué par une image et une voix peut être séparé selon un fichier d'image et selon un fichier de voix par ledit moyen de traitement (26) ; et **en ce que** le nombre de transferts de ladite mémoire FIFO (27) est établi à un multiple entier d'une dimension de transfert par salve desdites mémoires flash (40).
